# EUROPEAN PATENT APPLICATION

(11) **EP 2 262 231 A1**
(43) Date of publication of application: **15.12.2010**
(21) Application number: 09290422.6
(22) Date of filing: 10.06.2009
(51) Int. Cl.: H04N 5/445

(54) **Smart navigation inside an electronic programming guide**

(71) Applicant: Alcatel Lucent, 75008 Paris (FR)
(72) Inventor: Handekyn, Koen, 9080 - Lochristi (BE); Bruynooghe, Bert, 9050 - Gentbrugge (BE)
(74) Representative: Vandenbroeck, Josiane Anne Marie

(57) **Abstract**

A state machine for managing the navigation between cells of an Electronic Program Guide EPG of a multimedia device. The EPG comprises a grid of cells (C13 - C15, C23 - C25, C33 - C34) arranged in rows (R1, R2, R3). Each cell can be selected by a virtual cursor (0, 1, 2, 3, 4) positioned inside the cell. The state machine comprises an input handler module (IH) to detect horizontal and vertical navigation (H1, V1) between cells, and a cell offset module (CO) to set the virtual cursor in the middle of the cell selected at the end the navigation. On the one hand, in case of horizontal navigation, the cell offset module is immediately activated by the input handler module upon detection of this horizontal navigation. As a consequence, the virtual cursor is immediately set in the middle of the cell selected at the end of a horizontal navigation. On the other hand, in case of vertical navigation, the cell offset module is activated after a predetermined time delay (d) by a clock timer module (CT) which is triggered by the input handler module upon detection of this vertical navigation. As a consequence, the virtual cursor is only set in the middle of the cell selected at the end of the time delay after the vertical navigation. This state machine provides a smart, calm and intuitive navigation between cells inside the Electronic Programming Guide EPG.

## Description

The present invention relates to a state machine for managing an Electronic Program Guide EPG comprising a grid of cells arranged in a plurality of rows, each cell representing a multimedia program and each row comprising a series of cells representing consecutive programs of a same multimedia channel, wherein a cell is adapted to be selected by a virtual cursor positioned inside the selected cell, said state machine comprising an input handler module adapted to detect navigation from a first cell to a second cell in said grid whereby said state machine consequently places the virtual cursor from inside said first cell to inside said second cell.

Known Electronic Program Guides EPG, e.g. for IPTV devices, show 'grid' implementations that provide a user with a stateless navigation mechanisms within the grid of cells.

This leads to a non-intuitive navigation initiated by the user for most of the current implementations.

An object of the present invention is to provide a state machine for managing an Electronic Program Guide EPG of the above known type but wherein the navigation between cells is more smart and intuitive.

According to the invention, this object is achieved due to the fact that said state machine further comprises a clock timer module adapted to be triggered by said input handler module, and a cell offset module adapted to be activated either immediately by said input handler module or after a predetermined time delay by the triggered clock timer module, and that said cell offset module is adapted for positioning the virtual cursor in the middle of said second cell.

In this way, at least some navigation between the cells of the grid becomes time aware, dependent, e.g., of the direction of navigation.

In case the cell offset module is activated by the triggered clock timer module after a predetermined time delay, the position of the virtual cursor is only adjusted in the middle of the second cell when the user's intent is that he/she wants to stay on that second cell. In fact, the delay corresponds to an intent of the user for staying on a cell and the action of the cell offset module leads to a more intuitive navigation between cells.

In a preferred embodiment, the present invention is **characterized in that** said input handler module is adapted to activate immediately said cell offset module upon detection of horizontal navigation, and in that said input handler module is adapted to trigger said clock timer module upon detection of vertical navigation.

This embodiment solves the problem of a main consequence of the fact that there are no clear columns in EPG grids and that current navigation implementations are stateless whereby specifically vertical navigation is non intuitive for most of the current implementations.

Another a characterizing embodiment of the present invention is that said cell offset module is adapted for positioning the virtual cursor from a position on a first virtual vertical axis at the middle of a said first cell with respect to the horizontal length thereof, to a position on a second virtual vertical axis at the middle of a said second cell.

In this way, due to the non symmetrical structure of the grid of cells, the way up, i.e. vertically from one row to another row, may be different than the way down, which becomes more intuitive owing to this embodiment.

Further characterizing embodiments of the present state machine for managing an Electronic Program Guide EPG are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a state machine for managing an Electronic Program Guide EPG according to the invention; and
Figs. 2 to 4 show successive navigation steps within a grid of cells visible in a viewport VP of the Electronic Program Guide EPG.

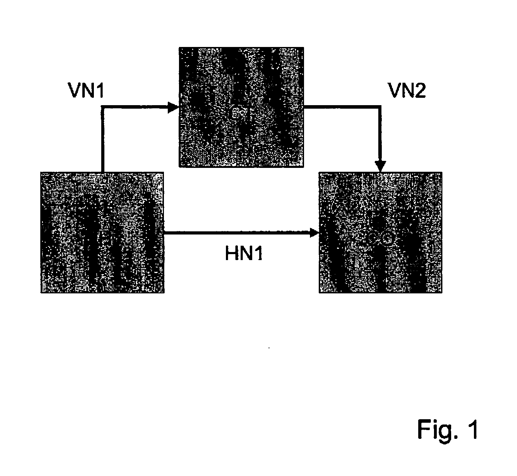

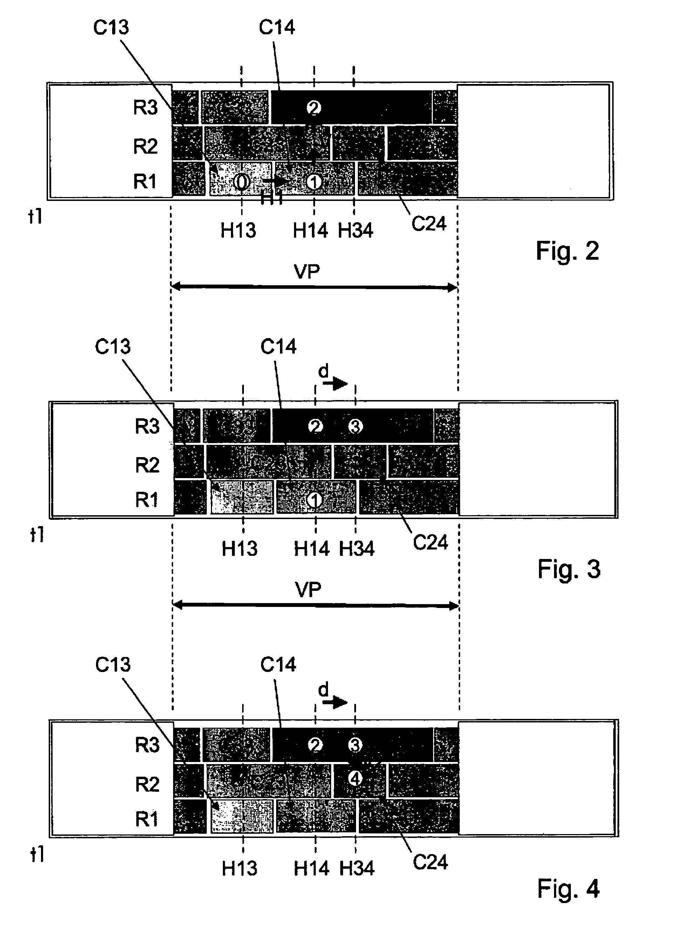

The state machine shown at Fig. 1 is used for managing the navigation between cells of an Electronic Program Guide EPG of a multimedia device, e.g. an IPTV. The EPG comprises a grid of cells C13 - C15, C23 - C25, C33 - C34 arranged in different rows R1, R2, R3 as shown at the Figs. 2 to 4. Each cell represents a multimedia program broadcasted by the multimedia device and each row comprises a series of cells representing consecutive programs of a same multimedia channel. Only a portion of the whole grid of cells is visible to a user within a viewport window VP. The viewport corresponds to a time range of the broadcasted multimedia programs.

The state machine of Fig. 1 comprises an input handler module IH for detecting the navigation from an initial cell, say C13 at Fig. 2, to a final destination cell, say C34 at Fig. 4. The navigation is for instance initiated by a user of the multimedia device.

At the start of a navigating through the Electronic Program Guide EPG, a virtual cursor 0 - invisible to the user - is located on a vertical axis H13 in the middle, with respect to its horizontal length, of the initial cell C13 selected by the user, as shown at Fig. 2.

A horizontal navigation H1 to the right and starting from the initial cell C13 is for instance detected by the input handler module IH.

Referring back to Fig. 1, the input handler module IH is able to detect horizontal and vertical navigation from the initial cell C13 to another cell in the grid, as a result of which the state machine places the virtual cursor inside the other cell.

To this end, the input handler module IH is able, upon detection of a horizontal navigation, i.e. between cells within a same row R1, R2 or R3, to immediately activate HN1 a cell offset module CO also belonging to the state machine.

The cell offset module CO is adapted for positioning the virtual cursor in the middle of the other cell.

In more detail, and referring to Fig. 2, in case of a horizontal navigation H1 from the cell C13 to the cell C14 on the same row R1, the virtual cursor 0 on the vertical axis H13 in the middle of the cell C13 is repositioned at 1 on the vertical axis H14 in the middle of the cell C14.

The state machine further comprises a clock timer module CT which is triggered VN1 by the input handler module IH when a vertical navigation, i.e. between different rows, is detected.

The clock timer module CT activates VN2 the cell offset module CO a time delay d after being triggered by the input handler module IH.

In more detail, and still referring to Fig. 2, in case of a vertical navigation V1 from the cell C14 to the cell C34, i.e. from the row R1 to the row R3, the virtual cursor 1 on the vertical axis H14 in the middle of the cell C14 is first repositioned at 2 on the same vertical axis H14. After the time delay d, as shown at Fig. 3, the cell offset module CO repositions the virtual cursor at 3 on the vertical axis H34 in the middle of the final cell C34.

As a consequence, when starting from the vertical way-up ending in row R3 at the virtual cursor position 2, if the user is merely passing by and navigates further vertically, e.g. down to the row R2, he/she will select the cell C23. This happens when the further navigation occurs before the end of the time delay d. On the other hand, if the user stays in cell C34 for a time delay longer than d, any further vertical navigation, e.g. down to the row R2, leads to the selection of the cell C24.

In other words, before the end of the time delay d, the virtual cursor, starting from the position 2 on the cell 34 will move on the vertical axis H14 down to the cell C23 whilst, after the end of the time delay d, the virtual cursor, starting then from the position 3 in the middle of the cell 34 will move on the vertical axis H34 down to the cell C23.

The present state machine provides a smart, calm and intuitive navigation between cells inside the Electronic Programming Guide EPG. Best results are obtained with a time delay of about 1000 ms.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A state machine for managing an Electronic Program Guide EPG comprising a grid of cells (C13 - C15, C23 - C25, C33 - C34) arranged in a plurality of rows (R1, R2, R3), each cell representing a multimedia program and each row comprising a series of cells representing consecutive programs of a same multimedia channel,
wherein a cell is adapted to be selected by a virtual cursor (0, 1, 2, 3, 4) positioned inside the selected cell,
said state machine comprising an input handler module (IH) adapted to detect navigation (H1, V1) from a first cell (C13) to a second cell (C14; C34) in said grid whereby said state machine consequently places the virtual cursor from inside (0) said first cell to inside (1; 2, 3) said second cell,
***characterized in that*** said state machine further comprises a clock timer module (CT) adapted to be triggered (VN1) by said input handler module (IH), and a cell offset module (CO) adapted to be activated (HN1, VN2) either immediately by said input handler module or after a predetermined time delay (d) by the triggered clock timer module,
*and **in that*** said cell offset module (CO) is adapted for positioning the virtual cursor in the middle (3) of said second cell (C34).

2. The state machine according to claim 1,
***characterized in that*** said input handler module (IH) is adapted to activate immediately said cell offset module (CO) upon detection of horizontal navigation (H1),
*and **in that*** said input handler module (IH) is adapted to trigger said clock timer module (CT) upon detection of vertical navigation (V1).

3. The state machine according to claim 2,
***characterized in that*** said horizontal navigation (H1) consists in selecting a said second cell (C14) within the same row (R1) as said first cell (C13),
*and **in that*** said vertical navigation (V1) consists in selecting a said second cell (C34) in a different row (R3) as the row (R1) of a said first cell (C14).

4. The state machine according to claim 3, ***characterized in that*** in case of vertical navigation (V1), the virtual cursor (1, 2) is displaced from a first row (R1) to a second row (R3) along a virtual vertical axis (H14).

5. The state machine according to claim 4, ***characterized in that*** said virtual vertical axis (H14) corresponds to the middle of a said first cell (C14) from which the vertical navigation (V1) starts.

6. The state machine according to any of the claims 1 or 5, ***characterized in that*** middle of a cell is considered with respect to the horizontal length of said cell.

7. The state machine according to claim 6, ***characterized in that*** said cell offset module (CO) is adapted for positioning the virtual cursor from a position (2) on a first virtual vertical axis (H14) at the middle of a said first cell (C14) towards a position (3) on a second virtual vertical axis (H34) at the middle of a said second cell (C34).

8. The state machine according to claim 1, ***characterized in that*** said navigation is initiated by a user of said Electronic Program Guide EPG.
